# EUROPÄISCHE PATENTSCHRIFT

(11) **EP 0 355 336 B1**
(45) Veröffentlichungstag und Bekanntmachung des Hinweises auf die Patenterteilung: **16.08.1995**
(21) Anmeldenummer: 89112047.9
(22) Anmeldetag: 01.07.1989
(51) Int. Cl.: G01S 13/68, G01S 13/44, F41G 7/30

(54) **Radarsystem zur Positionsbestimmung von zwei oder mehreren Objekten**
Radar system for position determination of two or more objects
Système radar pour la détermination de la position de deux ou plusieurs objets

(30) Priorität: 04.08.1988 CH 2964/88
(43) Veröffentlichungstag der Anmeldung: 28.02.1990
(73) Patentinhaber: SIEMENS-ALBIS AKTIENGESELLSCHAFT, 8047 Zürich (CH)
(72) Erfinder: Bächtiger, Rolf, CH-8966 Oberwil-Lieli (CH)

(56) Entgegenhaltungen:
- GB-A- 1 159 440
- GB-A- 1 179 691
- US-A- 3 455 522
- US-A- 3 560 974
- US-A- 4 442 431
- THE RECORD OF THE IEEE 1980 INTERNATIONAL RADAR CONFERENCE, Arlington,Virginia, 28.-30. April 1980, Seiten 1-7, IEEE, New York, US; L.E. KITCHENS:"The HR-76 fire control radar"
- CONFERENCE PROCEEDINGS, MILITARY MICROWAVES '86, Brighton, 24.-26. Juni 1986,Seiten 69-74, Microwave Exhibitions and Publishers Ltd, Tunbridge Wells, Kent,GB; R.L. STEGALL: "Multiple object tracking radar"

## Beschreibung

Die Erfindung betrifft ein Radarsystem zur Positionsbestimmung von mindestens zwei Objekten, mit einem Sender und einem Empfänger, bei dem der Sender mittels kodierter Sendeimpulse Steuerdaten an ein erstes, steuerbares Objekt übermittelt, das über einen Transponder Echosignale zu dem Empfänger zurücksendet, der eingangsseitig ein Mikrowellennetzwerk aufweist, von dem mehrere, vorzugsweise vier, parallele Empfangsverarbeitungskanäle einer Misch- und Vorverstärkereinrichtung zugeführt werden.

Radarsysteme die der automatischen Verfolgung eines Zieles dienen, erfordern eine Vermessung der räumlichen Ziellage in allen drei Koordinaten. Dabei sind der Genauigkeit der absoluten Winkelvermessung eines Zieles aufgrund von Unsymmetrien in den Signalverarbeitungskanälen sowie einer endlichen Genauigkeit in der Antennengeometrie Grenzen gesetzt. Diese variablen, d. h. z. B. von der Umgebungstemperatur abhängigen Einflüsse führen zu Abweichungen der Meßachse von der wirklichen Verbindungsachse-Antenne-Ziel, die nicht durch eine einmalige Korrektur beseitigt werden können. Sollen hingegen zwei oder mehrere Objekte vermessen werden, so ist es meist ausreichend, deren relative Lage zueinander zu ermitteln. So werden beim sogenannten Zieldeckungsverfahren die Daten von beispielsweise zwei Objekten durch ein Empfangssystem erfaßt, verarbeitet und untereinander in Beziehung gesetzt. Die, bei einer Bestimmung der absoluten räumlichen Lage eines Zieles auftretenden Fehler machen sich dabei nicht bemerkbar, so lange es gilt, nur die relative Lage der Objekte zueinander zu ermitteln. Das Zieldeckungsverfahren findet häufige Anwendung in der Flugobjektabwehr oder bei Rendezvousmanövern in der Raumfahrt, wo es gilt zwei oder mehrere Ziele zur Deckung zu bringen. Dabei wird der errechnete Positionsfehler laufend zumindest einem steuerbaren Objekt übermittelt an dem dann durch ein automatisches Steuersystem Flugbahnkorrekturen durchgeführt werden. Um die Störsicherheit bei der Objektvermessung zu erhöhen ist es üblich, mindestens eines der Objekte mit einem Transponder zur Verstärkung des Echosignales auszustatten. Das Transponderecho kann sich dabei in allen wesentlichen Parametern wie Frequenz, Modulation, spektrale Charakteristik vom Echosignal eines passiven Objektes unterscheiden. So ist es beispielsweise bekannt, das Echosignal des Transponders als Dauerstrichsignal auszusenden, was empfangsseitig den Einsatz äußerst schmalbandiger selektiver Filter erfordert, um dem System eine gewünschte Störfestigkeit zu verleihen. Ein schmalbandiger Empfänger ist aber in der Regel nur unzureichend geeignet auch passive Echoobjektsignale zufriedenstellend zu verarbeiten. Aufgrund des unterschiedlichen Dynamikbereiches zwischen passiven und Transponder-Echosignal, weisen daher bisher bekannte Systeme dieser Art im Empfangskanal des Folgeradars mindestens zum Teil getrennte Einrichtungen zur Verarbeitung der Echosignale auf. Getrennte Empfangskanäle ergeben aber meist voneinander abweichende Meßachsen und bedingen dadurch meist erhebliche Meßfehler. Damit geht ein Vorteil des Zieldeckungsverfahren verloren, der darin besteht, daß durch identische Echosignalverarbeitung im Empfänger keine differenziellen Fehler eingeführt werden. Die bisher bekannten Systeme werden den Anforderungen des Zieldeckungsverfahrens wie sie sich bei Verwendung von Transpondern ergeben, somit nur bedingt gerecht.

Ferner besteht bei der Überwachung von zwei oder mehreren Flugobjekten das Problem, dass sich deren Echosignale zeitweise überdecken können. Transponderechosignale und Echosignale passiver Objekte, die gleichzeitig auftreten, können dann kaum noch voneinander unterschieden werden, weshalb das Zieldeckungsverfahren oft nicht mehr erfolgreich abgeschlossen werden kann.

Aus der US-A-4 442 431 ist ein für die Installation in Flugzeugen vorgesehenes Radarsystem bekannt, das einen ersten Regelkreis für die Ausrichtung der Radarantenne auf ein erdgebundenes Ziel und einen zweiten Regelkreis aufweist, mittels dem eine Rakete, bezüglich Azimut, entlang der Antennenachse führbar ist. Eine Steuerung bezüglich Elevation ist dabei nicht vorgesehen. Die vom Radarsystem geführte Rakete weist einen Transponder auf, in dem ein Zirkulator empfangene Radarimpulse an einen Empfänger abgibt, von dem sie einerseits einem Dekoder und andererseits über eine permanent zugeschaltete Verzögerungsleitung, einen Verstärker sowie den Zirkulator der Sendeantenne zugeführt werden. Durch die Verzögerungsleitung werden die Antwortimpulse derart zeitlich verzögert, dass sie nicht gleichzeitig mit den Zielechosignalen auftreten, falls die Rakete in die Nähe des Zieles gelangt. Nachteilig bei diesem Verfahren ist, dass sich die Transponder- und Zielechosignalen dafür bereits zu einem früheren Zeitpunkt überdekken, wodurch das Zieldeckungsverfahren bereits zu einem früheren Zeitpunkt gestört wird. Insbesondere bei kurzen Verfolgungszeiten kann das Zieldeckungsverfahren daher auch mit diesem bekannten System nicht erfolgreich durchgeführt werden.

Der Erfindung liegt daher die Aufgabe zugrunde, ein Radarsystem anzugeben, mit dem die relative räumliche Lage zwischen zwei oder mehreren Objekten, von denen mindestens eines zur Echosignalverstärkung einen Transponder aufweist, jederzeit genau und sicher bestimmbar ist.

Diese Aufgabe wird durch die im Kennzeichen von Anspruch 1 bzw. 5 angegebenen Massnahmen gelöst. Vorteilhafte Ausgestaltungen der Erfindung sind in weiteren Ansprüchen angegeben.

Durch die doppelte Ausnützung des Radarempfängers ergibt sich nicht nur eine verbesserte Genauigkeit beim Zieldeckungsverfahren, sondern auch eine erhebliche einsparung und Vereinfachung im Empfänger der Radaranlage. Die verwendeten Sendeimpulse können eine charakteristische Phasenkodierung aufweisen, die empfangsseitig in einem sogenannten Pulskompressionsfilter zur Korrelation dient. Dadurch, daß der Transponder Impulse mit derselben Phasenkodierung zurücksendet, erfolgt im Empfänger dieselbe Empfangskorrelation.

Die Erfindung betrifft weiterhin einen Transponder zur Verwendung in einem erfindungsgemäßen Radarsystem, der einen Dekoder aufweist, der eingangsseitig mit einer aus Antenne, Begrenzer, Zirkulator und Mikrowellennetzwerk bestehenden Reihenschaltung verbunden ist, und der aus den empfangenen kodierten Radarsendeimpulsen, Steuersignale für das Objekt ableitet, sowie ein Triggersignal für einen Signalgenerator festlegt, und daß eine über den Dekoder zuschaltbare Verzögerungseinrichtung für das Triggersignal vorgesehen ist, so daß eine verzögerte Signalauslösung im Signalgenerator ermöglicht wird. Der Signalgenerator ist über einen mit einem Oszillator verbundenen Frequenzumsetzer und nachgeschalteten Leistungsverstärker an den Zirkulator angeschlossen.

Da sämtliche Empfangssignale durch den gleichen Empfänger aufbereitet werden, ist dafür zu sorgen, daß von verschiedenen Objekten empfangene Echos zeitlich auseinander liegen. Werden beispielsweise nur passive Echosignale von zwei oder mehreren Objekten empfangen, so können diese nur dann als getrennt verarbeitet werden, so lange das Distanzauflösungsvermögen des Radarsystems nicht überschritten wird. Der erfindungsgemäße Transponder weist deshalb vorteilhaft eine zuschaltbare Verzögerungseinrichtung auf, mit der die Echosignale um einen konstanten Betrag verzögert abgestrahlt werden. Die zunächst unmittelbar nach dem Empfang des Radarsignals mit einer nur minimalen Verzögerung abgestrahlten Echosignale werden bei Unterschreiten einer bestimmten Distanz zu einem anderen Objekt dadurch verzögert abgestrahlt. Damit ist gewährleistet, daß sich im Radarempfänger die verschiedenen Echosignale nicht überlagern, sobald sich Objekte über das Distanzauflösungsvermögen des Radarsystems hinaus einander annähern.

Weitere vorteilhafte Ausgestaltungen der Erfindung sind in den Unteransprüchen wiedergegeben.

In folgendem wird ein Ausführungsbeispiel der Erfindung anhand von Zeichnungen näher erläutert.

Es zeigen
- Fig. 1: ein Blockschaltbild einer Folgeradaranlage für ein Radarsystem nach der Erfindung.
- Fig. 2: ein Blockschaltbild einer möglichen Misch- und Vorverstärkereinrichtung der Folgeradaranlage.
- Fig. 3: ein Blockschaltbild eines Radartransponders für ein Radarsystem nach der Erfindung.
- Fig. 4: den zeitlichen Verlauf von zwei in der Folgeradaranlage empfangenen Echosignale.

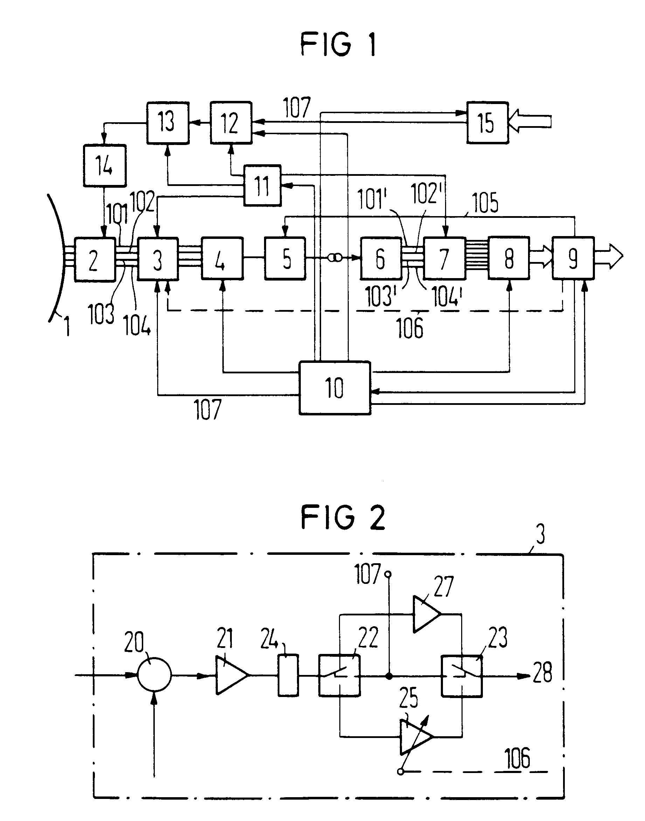

Die Folgeradaranlage nach Fig. 1 weist eine durch vier parallele Empfangsverarbeitungskanäle 101,102,103 und 104 verbundene Reihenschaltung bestehend aus Mikrowellennetzwerk 2, Misch- und Vorverstärkereinrichtung 3 und Zwischenfrequenzmultiplexer 4 auf. Der Zwischenfrequenzmultiplexer 4 ist ausgangsseitig mit einem Zwischenfrequenzverstärker 5 verbunden, dem ein Demultiplexer 6 nachgeschaltet ist. Der Demultiplexer 6 ist ausgangsseitig über die parallelen Empfangsverarbeitungskanäle 101′,102′,103′ und 104′ mit einem Quadraturdemodulator 7 verbunden, dem ein Analogdigitalwandler 8 sowie ein digitaler Signalprozessor 9 nachgeschaltet sind. Der Zwischenfrequenzverstärker 5, sowie gegebenenfalls die Misch- und die Vorverstärkereinrichtung 3 sind über die Leitungen 105 bzw. 106 mit aus dem digitalen Signalprozessor 9 abgeleiteten Steuerimpulsen beaufschlagt. Die Steuerimpulse und ihre Wirkung werden später erläutert. Sendeseitig ist eine aus einem Impulsexpander 12, einen Aufwärtsumsetzer 13 sowie einen Sendeverstärker 14 bestehende Reihenschaltung an das Mikrowellennetzwerk 2 angeschlossen, das mit der gemeinsamen Sende- und Empfangsantenne 1 verbunden ist.

Ein Frequenzsynthesizer 11 ist ausgangsseitig mit dem Impulsexpander 12, dem Aufwärtsumsetzer 13, der Misch- und Vorverstärkereinrichtung 3 sowie dem Quadraturdemodulator 7 verbunden. Der digitale Signalprozessor 9 ist mit einer zentralen Steuereinrichtung 10 verbunden, die ausgangsseitig an den Analogdigitalwandler 8, Impulsexpander 12, Frequenzsynthesizer 11, Zwischenfrequenzmultiplexer 4, der Misch- und Vorverstärkereinrichtung 3 sowie an einem Koder 15 angeschlossen ist. Vom Koder 15 werden über die Leitung 107 dem Impulsexpander 12 Steuersignale zugeführt.

Die Arbeitsweise eines solchen Systems wird nachstehend erläutert.

Im Frequenzsythesizer 11 wird durch die zentrale Steuereinrichtung 10 eine bestimmte Trägerfrequenz aus mehreren auswählbaren Trägerfrequenzen festgelegt. Aus den vom Frequenzsynthesizer 11 erhaltenden Impulsen wird im Impulsexpander 12 ein frequenzmodulierter Sendeimpuls (Chirpimpuls) generiert, beispielsweise mittels einer dispersiven Verzögerungsleitung. Des weiteren wird im Impulsexpander 12 dem Sendeimpuls in Abhängigkeit von den Modulationssignalen des Koders 15 eine charakteristische Phasen- und Amplitudenkodierung aufgeprägt. Diese Phasenkodierung und/oder Amplitudenkodierung enthält Befehls- und Steuerdaten für ein geeignetes Flugobjekt, das sich im Strahl des Folgeradars befindet. Dieser kodierte Sendeimpuls wird nach Erhalt eines Sendeauslöserimpulses von der zentralen Steuereinrichtung 10 zum Aufwärtsumsetzer 13 geleitet dem auch die ausgewählte Trägerfrequenz des Frequenzsynthesizers 11 zugeführt wird. Das im Aufwärtsumsetzer 13 auf die Trägerfrequenz aufmodulierte Sendesignal wird einem Sendeverstärker 14 zugeführt. Der geeignet verstärkte Sendeimpuls gelangt über das Mikrowellennetzwerk 2 an die gemeinsame Sende- und Empfangsantenne 1, wo dessen Abstrahlung erfolgt. Im folgenden soll das Zieldeckungsverfahren die Funktionsweise der Empfangseinrichtung des erfindungsgemäßen Radarsystems näher erläutert werden. Wird beispielsweise ein Flugobjekt vom Folgeradar erfaßt, wird eih steuerbares Flugobjekt, im folgenden Flugkörper genannt, in den abgestrahlten Sendeimpulsrichtstrahl eingebracht. Dieser Flugkörper weist einen erfindungsgemäßen Transponder (siehe Fig. 4) auf, der in Abhängigkeit von den empfangenen phasenkodierten Sendeimpulsen wiederum phasenkodierte Echosignale E_{T} abstrahlt. Gleichzeitig werden die im Flugkörper empfangenen phasenkodierten Sendeimpulse dazu benutzt, um das Flugobjekt in seiner Flugbahn zu steuern. Zwischen der Abstrahlung der einzelnen Sendeimpulse werden also das passive Zielobjektecho E_{P} sowie das verstärkte Transponderecho E_{T} von der Antenne 1 empfangen. Durch spezielle Maßnahmen im Transponder, wie in Fig. 4 näher erläutert ist, wird gewährleistet, daß das Transponderechosignal und das passive Objektsignal E_{P} nie gleichzeitig an den Radarempfänger gelangen. Im Mikrowellennetzwerk 2 werden aus den empfangenen Echosignalen Summen bzw. Differenzsignale für Summe, Azimut, Elevation und gegebenenfalls für ein Fehlerkorrektursignal (Crossfeed) gebildet und über entsprechende parallele Empfangsverarbeitungskanäle 101,102,103 und 104 der Misch- und Vorverstärkereinrichtung 3 zugeführt. In dieser erfolgt, für jeden Empfangsverarbeitungskanal z. B. 101 getrennt, die Umsetzung der Echosignale in den Zwischenfrequenzbereich sowie eine anschließende Vorverstärkung. Das für die Frequenzumsetzung notwendige Trägerfrequenzsignal wird vom Frequenzsynthesizer 11 erhalten, wobei dessen Frequenz der um die Zwischenfrequenz versetzten Trägerfrequenz des abgesandten Sendeimpulses bzw. des empfangenen Transponderechos entspricht. Im Vorverstärker durchlaufen die empfangenen Echosignale ein von der zentralen Steuereinrichtung 10 gesteuertes Kompressionsnetzwerk, wo eine spektrale Wichtung der Echosignale erfolgt. Die auf diese Weise in den Zwischenfrequenzbereich umgesetzten und gewichteten Echosignale werden über die vier parallelen Empfangsverarbeitungskanäle einen Zwischenfrequenzmultiplexer 4 zugeführt, der von der zentralen Steuereinrichtung 10 Schaltimpulse empfängt. Im Zwischenfrequenzmultiplexer 4 durchlaufen die Echosignale auf den parallelen Empfangsverarbeitungskanälen jeweils verschiedene Verzögerungsleitungen und werden nacheinander einem gemeinsamen Zwischenverstärker 5 zugeführt. Im Demultiplexer 6 werden die durch den Zwischenverstärker 5 nacheinander verstärkten Echosignale durch entsprechende Verzögerungsleitungen wieder auf die parallelen Empfangsverarbeitungskanäle 101′,102′,103′ und 104′ aufgeteilt und einem Quadraturdemodulator 7 zugeführt. Dieser erhält vom Frequenzsynthesizer 11 phasenverschobene Mischsignale, so daß ausgangsseitig pro Empfangsverarbeitungskanal z. B. 101′ die entsprechenden I- und Q-Anteile der empfangenden Echosignale verfügbar sind, die zueinander in Phasenquadratur stehen. Im Digitalanalogwandler 8, der von der zentralen Steuereinrichtung 10 Taktsignale erhält, erfolgt die Digitalisierung der vom Quadraturdemulator 5 erhaltenen Echosignale. Diese werden zu einer einem digitalen Signalprozessor 9 weitergeführt, der die Radarwinkel- und Entfernungsdaten auswertet.

Um mit der obenstehend beschriebenen Folgeradaranlage sowohl passive E_{P} als auch Transponderechosignale E_{T} mit ein und derselben Empfangseinrichtung verarbeiten zu können, ist es erforderlich, die Empfangseinrichtung derart auszulegen, daß auch Echosignale mit stark unterschiedlichem Dynamikbereich verarbeitet werden können. Dies kann beispielsweise dadurch realisiert werden, daß der Zwischenfrequenzverstärker 5 ein Amplitudenregelungsstellglied aufweist, das in Abhängigkeit vom Dynamikpegel des gerade empfangenen Echosignales den Verstärkungsfaktor bzw. den Dämpfungsfaktor des Zwischenfrequenzverstärkers 5 verändert. Die, die Verstärkung bzw. Dämpfung des Zwischenfrequenzverstärkers 5 beeinflussende Regelgröße wird im digitalen Signalprozessor 9 bestimmt. Dazu sind im Signalprozessor 9 zwei getrennte Amplitudenmeßeinrichtungen, jeweils für das Großpegelsignal entsprechend dem Transponderecho E_{T} und für das Kleinpegelsignal entsprechend dem Flugzeugecho E_{P} vorgesehen. In Abhängigkeit von den in den Amplitudenmeßeinrichtungen ermittelten Amplitudenwerten, werden entsprechende Regelgrößen abgeleitet, die alternierend über einen Umschalter im Sinne einer getasteten Regelung dem Zwischenfrequenzverstärker 5 über die Leitung 105 zugeführt werden. Da die am Eingang des Zwischenfrequenzverstärkers 5 zu verarbeitenden Echosignale alternierend einen geringen bzw. großen Dynamikpegel aufweisen, erfolgt die Regelung mittels des Umschalters derart, daß großpegelige Signale (z. B. Transponderechosignale) entsprechend gedämpft, während Kleinpegelsignale (z. B. passive Objektsignale) entsprechend verstärkt werden. Durch diese getastete Regelung werden am Ausgang des Zwischenfrequenzverstärkers 5 Signale etwa gleicher Amplitude erhalten.

Anstatt den Dynamikpegelausgleich durch getastete Regelung im Zwischenfrequenzverstärker 5 durchzuführen, sei in Fig. 2 eine weitere Möglichkeit aufgezeigt, einen Dynamikpegelausgleich in der Misch- und Vorverstärkereinrichtung 3 zwischen den empfangenen Echosignalen durchzuführen. Diese Anordnung ist dabei für jeden Signalverarbeitungskanal z. B. 101 getrennt vorzusehen. Die im Mischer 20 auf die Zwischenfrequenzlage umgesetzten Echosignale werden über einen Vorverstärker 21 einer Kompressoreinrichtung 24 zugeführt, wo der jeweilige expandierte Signalzug in bekannter Weise ein Impulskompressionsfilter durchläuft. Die Kompressoreneinrichtung 24 ist ausgangsseitig an einen Umschalter 22 zugeführt, der in Verbindung mit einem Umschalter 23, die Auswahl zweier paralleler Signalwege mit unterschiedlicher Dämpfung bzw. Verstärkung ermöglicht. Dazu weist einer der parallelen Signalwege einen Vorverstärker 27 mit konstantem Verstärkungsgrad auf, während der andere der parallelen Signalwege einen in seinem Dämpfungsgrad regelbaren Abschwächer 25 aufweist. Die Regelgröße für den Abschwächer 25 wird dabei, wie vorstehend beschrieben, im digitalen Signalprozessor 9 aus dem Amplitudenunterschied des Transponderechosignales E_{T} und des passiven Objektsignales E_{P} abgeleitet und über die Leitung 106 dem Abschwächer 25 zugeführt. Die über die Zuleitung 107 von der zentralen Steuereinrichtung 10 gesteuerte Umschaltung der Umschalter 22 bzw. 23 erfolgt dahingehend, daß die Großpegelsignale (Transponderechosignale E_{T}) über den Signalweg mit dem Abschwächer 25 geleitet werden, während die Kleinpegelsignale (passive Objektsignale) den Signalweg mit dem Vorverstärker 27 durchlaufen.

Dadurch, daß eine vom Dynamikpegel der empfangenen Echosignale abhängige Signalverarbeitung im Vorverstärker erfolgt, erhält man am Ausgang 28 in ihren Dynamikpegel angeglichene Signale zur weiteren Verarbeitung.

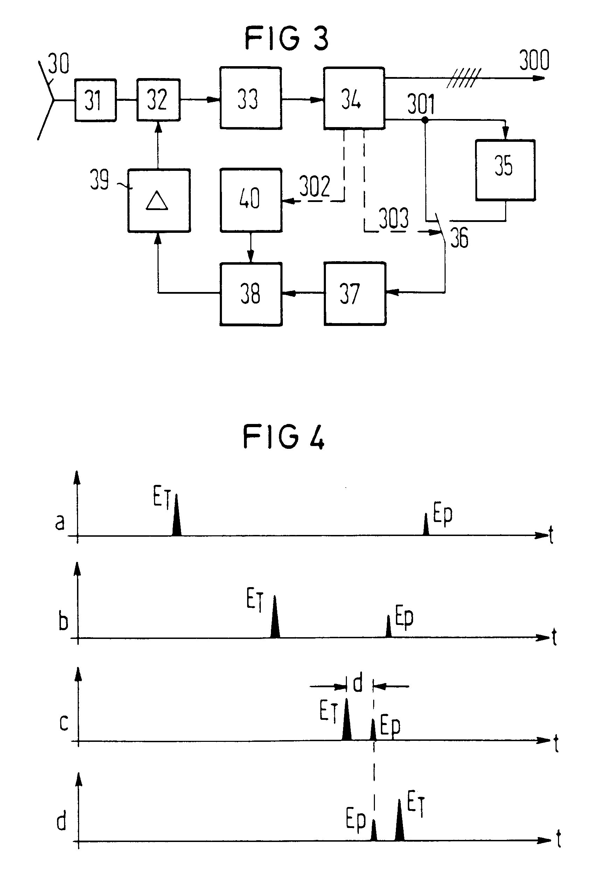

Fig. 3 zeigt einen zum Radarsystem gehörigen erfindungsgemäßen Transponder eines Flugkörpers. Dieser weist einen Dekoder 34 auf, dem über eine Reihenschaltung bestehend aus Sendeempfangsantenne 30, Begrenzer 31, Zirkulator 32 und Mikrowellenempfänger 33 die vom Sender der Folgeradaranlage empfangenen Sendeimpulse zugeführt werden. Ein Signalgenerator 37 ist über einen Umschalter 36 entweder direkt oder über eine Verzögerungseinrichtung 35 mit einem Ausgang 301 des Dekoders verbindbar. Ein Frequenzumsetzer 38 ist eingangsseitig mit dem Signalgenerator 37 sowie mit einem Oszillator 40 verbunden und ausgangsseitig über einen Leistungsverstärker 39 an den Zirkulator 32 angeschlossen. Dem Umschalter 36 sowie dem Oszillator 40 werden vom Dekoder 5 Steuersignale zugeführt.

Die Funktionsweise des erfindungsgemäßen Flugkörpertransponders soll in Zusammenwirken mit der Folgeradaranlage nach Fig. 1 näher erläutert werden. Die vom Sender der Folgeradaranlage ausgesandten phasenkodierten Sendeimpulse werden von der gemeinsamen Sende- und Empfangsantenne 30 empfangen und durchlaufen anschließend einen Begrenzer 31. Die so empfangenen Signale werden über den Zirkulator 32 und den nachgeschalteten Mikrowellenempfänger 33 dem Dekoder 34 zugeführt, der in Abhängikeit von der Phasenkodierung und/oder Amplitudenkodierung des empfangenen Signals verschiedene Funktionen im Transponder steuert. Zum einen werden aus der Amplitudenkodierung die Steuerdaten für das Flugobjekt abgeleitet, die über die Leitung 300 einem Steuermechanismus (in Fig. 3 nicht dargestellt) zugeführt werden. Zum zweiten wird aus den phasenkodierten Sendeimpulsen ein Triggersignal für den Transpondersender abgeleitet. Dies kann beispielsweise dadurch erfolgen, daß die Anfangsflanke des empfangenen Chirp-Impulses als Triggerauslöser genommen wird. Dieses Triggersignal kann dabei wählbar über den Umschalter 36 entweder direkt oder mit Verzögerung dem Signalgenerator 37 zugeführt werden. Das über den Umschalter 36 bewirkte Ein- oder Wegschalten der Verzögerungseinrichtung 35 wird dabei ebenfalls aus der Phasenkodierung durch den Dekoder 34 bewirkt. Des weiteren wird aus der empfangenen Phasenkodierung durch den Dekoder 34 im Oszillator 40 die Sendefrequenz des Transponders festgelegt. Sobald der Signalgenerator 37 das Triggersignal erhält, wird ein Chirp-Signal erzeugt, das bezuglich Kodierung und Bandbreite dem ursprünglich im Sender erzeugten, phasenkodierten, jedoch nicht mit dem Steuerkode versehenen Sendeimpuls entspricht. Anschliessend wird das Chirp-Signal im Frequenzumsetzer 38 auf den vom Oszillator 40 stammenden hochfrequenten Träger im Mikrowellenbereich umgesetzt. Nach anschließender Verstärkung im Verstärker 39 wird das hochfrequente Signal über den Zirkulator 32 an der gemeinsamen Sendeempfangsantenne 30 abgestrahlt.

Mit dem erfindungsgemäßen Radartransponder können Chirp-Signale entweder unmittelbar nach Empfang des aus dem empfangenen Radarsendeimpuls abgeleiteten Triggersignales oder mit einer festen Verzögerungszeit ab Triggersignal ausgesendet werden. Die durch die Verzögerungseinrichtung 35 festgelegte Verzögerungszeit kann in der Größenordnung von einigen »s liegen.

Anhand der Fig. 4 werden nachfolgend weitere Einzelheiten des Gasamtsystems unter Bezugnahme auf Fig. 1 und Fig. 3 erläutert. Der in Fig. 4 dargestellte Zeitdistanzverlauf von 2 unterschiedlichen Empfangssignalen E_{P} und E_{T} des Folgeradars ist dabei im Zusammenhang mit dem Zieldeckungsverfahren zu verstehen. Dabei soll beispielsweise ein vom Folgeradar erfaßtes Flugobjekt (Ziel) mit einem in den Radarstrahl eingebrachten Flugobjekt zur Deckung gebracht werden. Die Folgeradaranlage empfängt nun hebst dem passiven Echo E_{P} des Flugobjektes auch noch die Transpondersignale E_{T} des Flugkörpers und vermißt beide. Aufgrund der ermittelten Positionsdaten von Flugobjekt und Flugkörper werden Flugbahnkorrekturdaten für das Flugobjekt ermittelt, die durch Phasenkodierung und/oder Amplitudenkodierung des Radarsendeimpulses dem Flugkörper übermittelt werden, da sowohl das passive Echoobjektsignal E_{P} als auch das Transponderechosignal E_{T} durch ein und dem selben Empfänger (gemäß Fig. 1) verarbeitet werden, ist dafür zu sorgen, daß die verschiedenen empfangenen Echos zeitlich auseinander liegen, d. h. ohne Überlappung an den Eingang des Empfängers der Folgeradaranlage gelangen. Im beschriebenen System wird eine Überlappung der Empfangssignale dadurch vermieden, daß das Auslösemoment des Transponderechos (E_{T}) durch den Radarsendeimpuls gesteuert wird.

Fig. 4 zeigt den zeitlichen Verlauf t bzw. den Abstand der im Empfänger der Folgeradaranlage eintreffenden Echosignale E_{P} und E_{T}. Wie Fig. 4a zeigt entspricht ein anfänglich großer Distanzunterschied zwischen dem Flugobjekt und den Flugkörper ein entsprechend großer Zeitabstand zwischen dem passiven Echosignal E_{T} sowie dem Transponderechosignal EF. Dabei trifft das Transponderechosignal E_{T} zeitlich füher am Radarempfänger ein als das passive Objektecho E_{P}. Der im Flugkörper eingebaute Radartransponder sendet also nach Empfang des Radarsendeimpulses vom Folgeradar mit minimaler Verzögerung einen leistungsstarken Impuls derselben Frequenz und Phasenkodierung zurück. Die Impulsrepetitionsfrequenz des Flugkörpers ist somit identisch und synchron mit der des Folgeradars. Fliegt der Flugkörper jetzt auf das Flugobjekt zu, so verkleinert sich der zeitliche Abstand zwischen dem empfangenen Transponderecho E_{T} und dem passiven Echo E_{T} des Flugobjektes (siehe Fig. 4b).

Sobald die Distanz zwischen den beiden Objekten einen bestimmten Wert unterschritten hat, d. h. der Abstand zwischen den beiden Echos eine bestimmte zeitliche Distanz d erreicht hat, wo sich Flugobjekt und Flugkörper sehr nahe sind, aber von den Auflösungszellen des Radarsystems noch sicher getrennt werden können, wird über den ausgesandten Radarsendeimpuls die Verzögerungseinrichtung im Transponder wirksam. Das Transponderecho E_{T} erscheint nun schlagartig verzögert, zeitlich hinter den passiven Echoobjektsignal E_{P}, z. B. um den Betrag einigen »s. Dieser Vorgang ist in den Figuren 4c und 4d dargestellt, die unmittelbar aufeinander folgen. Gemäß der Fig. 4d erscheint die zeitliche Reihenfolge des Flugkörperechos E_{T} und des passiven Echos E_{P} nun zeitlich vertauscht, d. h. der Radarempfänger empfängt zuerst das passive Objektecho E_{P} und anschließend das Transponderecho E_{T}. Dabei hat der Flugkörper das Flugobjekt noch nicht erreicht, sondern er befindet sich noch näher zum Radarsystem.

Dadurch, daß die Transponderechosignale E_{T} um einen konstanten Wert verzögert abgestrahlt werden, ist gewährleistet, daß es zu keiner Überlagerung der Echos im Empfänger der Radaranlage kommt, auch wenn sich die beiden Flugobjekte unter die Auflösungsdistanz nähern. Die angegebene Folgeradaranlage arbeitet mit Impulskompressionstechnik, wobei der Sendeimpuls eine charakteristische Phasenkodierung aufweist, die empfangsseitig in einem sogenannten Pulskompressionsfilter korreliert. Dadurch, dass der Flugkörpertransponder ebenso Impulse zurücksendet, die bezüglich ihrer Kodierung und Bandbreite den ursprünglich im Sender erzeugten phasenkodierten, jedoch nicht mit dem Steuercode versehenen Sendeimpulsen entsprechen, erfolgt im Radarempfänger dieselbe Empfangskorrelation.

## Patentansprüche

1. Radarsystem zur sequentiellen Vermessung der räumlichen Lage mindestens eines ersten bewegbaren Objekts und eines durch das Radarsystem bezüglich der relativen Lage zum ersten Objekt steuerbaren zweiten fliegenden Objekts, mit einem Sender und einem Empfänger, bei dem der Sender mittels eines Steuerkodes, der einem phasenkodierten Sendeimpuls aufgeprägt wird, Steuerdaten an das zweite Objekt übermittelt, das über einen Transponder Echosignale (E_{T}), die bezüglich ihrer Kodierung und Bandbreite den ursprünglich im Sender erzeugten Sendeimpulsen entsprechen, zum Empfänger zurücksendet, der eingangsseitig ein Mikrowellennetzwerk (2) aufweist, das über mehrere, vorzugsweise vier, parallele Empfangsverarbeitungskanäle (101, 102, 103, 104) mit einer Misch- und Vorverstärkereinrichtung (3) verbunden ist, dass im Empfänger sowohl für die passiven Echosignale (E_{P}) als auch für die Transponderechosignale (E_{T}) dieselben Empfangskanäle (z.B. 101, 101') vorgesehen sind, **dadurch gekennzeichnet**, dass den Steuerdaten Informationen zur Steuerung des zweiten Objekts bezüglich Elevation und Azimut sowie ein Befehl zufügbar sind, durch den eine zusätzliche Verzögerung bei der Abgabe der Transponderechosignale (E_{T}) bewirkt wird, falls die Zeitdifferenz des Auftretens der von dem zweiten und den weiteren Objekten abgegebenen Echosignale (E_{P} bzw. E_{T}) einen festgelegten Minimalwert unterschreitet.

2. Radarsystem nach Anspruch 1, **dadurch gekennzeichnet**, dass im Empfangsweg des Empfängers ein für die Signale aller Empfangsverarbeitungskanäle (101, 102, 103, 104) gemeinsamer Zwischenfrequenzverstärker (5) vorgesehen ist, der nacheinander mit den über einen Zwischenfrequenzmultiplexer (4) zugeführten Signale der parallelen Empfangsverarbeitungskanäle (z.B. 101) beaufschlagt wird, und dass dem Zwischenfrequenzverstärker (5) ein Demultiplexer (6) nachgeschaltet ist, der ausgangsseitig die seriell verstärkten Signale zur weiteren Verarbeitung auf die parallelen Empfangsverarbeitungskanäle (101', 102', 103,' 104') aufteilt.

3. Radarsystem nach Anspruch 1 oder 2, **dadurch gekennzeichnet**, dass der Zwischenfrequenzverstärker (5) ein der Amplitudenregelung dienendes Stellglied aufweist, das in Abhängigkeit von dem in einem nachgeschalteten Signalprozessor (9) ermittelten Dynamikpegel der empfangenen Echosignale (E_{P}, E_{T}) den Dämpfungsfaktor des Zwischenfrequenzverstärkers durch getastete Regelung (5) derart steuert, dass beide Echosignale (E_{P}, E_{T}) ein angeglichenes Signalniveau aufweisen.

4. Radarsystem nach einem der Ansprüche 1 oder 2, **dadurch gekennzeichnet**, dass zum Dynamikausgleich zwischen den passiven (E_{P}) und den Transponderechosignalen (E_{T}) in der Misch- und Vorverstärkereinrichtung (3) für jeden Empfangsverarbeitungskanal (z.B. 101) zwei umschaltbare, parallele Signalwege unterschiedlicher Dämpfung bzw. Verstärkung vorgesehen sind, und dass die Umschaltung über eine zentrale Steuereinrichtung (10) derart erfolgt, dass das Transponderechosignal (E_{T}) einem gesteuerten Abschwächer (25) und das passive Objektsignal (E_{P}) einem Vorverstärker (27) zugeführt wird.

5. Transponder für den Empfang kodierter Radarsendeimpulse, die durch ein Radarsystem nach einem der Ansprüche 1-4 erzeugt werden, sowie zur Abgabe von Transponderechosignalen (E_{T}), mit einem Dekoder (34), der eingangsseitig mit einer aus Antenne (30), Begrenzer (31), Zirkulator (32) und Mikrowellennetzwerk (33) bestehenden Reihenschaltung verbunden ist und der zur Auswertung der empfangenen Radarsendeimpulse vorgesehen ist, **dadurch gekennzeichnet**, dass im Dekoder (34) aus den Radarsendeimpulsen ein Triggersignal für einen Signalgenerator (37) sowie Steuersignale für ein zweites fliegendes Objekt ableitbar sind, das bezüglich der relativen räumlichen Lage eines ersten bewegbaren Objekts steuerbar ist, dass eine über den Dekoder (34) zuschaltbare Verzögerungseinrichtung (35) für das Triggersignal vorgesehen ist, die eine verzögerte Signalauslösung im Signalgenerator (37) ermöglicht, dass der Signalgenerator (37) über einen mit einem Oszillator (40) verbundenen Frequenzumsetzer (38) und nachgeschalteten Leistungsverstärker (39) an den Zirkulator (32) angeschlossen ist und dass der Transponder in der Lage ist, Transponderechosignale (E_{T}) mit einer durch die zuschaltbare Verzögerungseinrichtung (35) bestimmten zusätzlichen Verzögerung abzugeben, falls ein entsprechender Befehl aus den Steuerdaten ermittelt wird.

6. Transponder nach Anspruch 5, **dadurch gekennzeichnet**, dass die Impulsrepetitionsfrequenz der Transponderechosignale (E_{T}) synchron und identisch zur Impulsrepetitionsfrequenz des Senders ist.

7. Transponder nach einem der Ansprüche 5 und 6, **dadurch gekennzeichnet**, dass die Umschaltung von unverzögerter auf verzögerte Signalauslösung im Signalgenerator (37) vor dem Unterschreiten der Systemdistanzauflösung zwischen den zu vermessenden ersten und zweiten Objekten erfolgt, und dass die Verzögerungszeit der verzögert abgegebenen Transponderechosignale (E_{T}) dabei in der Grössenordnung von einigen »s liegt.

8. Transponder nach einem der Ansprüche 5 bis 7, **dadurch gekennzeichnet**, dass der Transponderoszillator (40) für mehrere Sendefrequenzen ausgelegt ist, deren Einstellung über den Dekoder (34) in Abhängigkeit von den empfangenen, kodierten Sendeimpulsen erfolgt.

9. Transponder nach einem der Ansprüche 5 bis 8, **dadurch gekennzeichnet**, dass der Transponder derart ausgestaltet ist, dass die zurückgesendeten Transponderechosignale (E_{T}) bezüglich ihrer Kodierung und Bandbreite den ursprünglich im Sender des Radarsystems erzeugten, phasenkodierten, jedoch nicht mit dem Steuerkode versehenen Sendeimpulsen entsprechen.

## Claims

1. Radar system for the sequential measurement of the spatial location of at least a first movable object and of a second flying object which can be controlled by the radar system in terms of the relative location with respect to the first object, having a transmitter and a receiver, wherein by means of a control code which is impressed on a phase-coded transmission pulse, the transmitter transmits control data to the second object, which sends back echo signals (E_{T}) to the receiver via a transponder, which echo signals correspond, in terms of their coding and band width, to the transmission pulses originally produced in the transmitter, and which receiver has on the input side a microwave network (2) which is connected to a mixer and pre-amplifier device (3) via several, preferably four, parallel reception processing channels (101, 102, 103, 104), the same reception channels (e.g. 101, 101') being provided in the receiver for both the passive echo signals (E_{P}) and the transponder echo signals (E_{T}), characterised in that to the control data can be added information for the control of the second object in terms of elevation and azimuth, as well as a command, by means of which an additional delay in the emission of the transponder echo signals (E_{T}) is effected if the time differential of the occurrence of the echo signals (E_{P} and E_{T}) emitted by the second object and the further objects falls short of a set minimum value.

2. Radar system according to claim 1, characterised in that provided in the receiving path of the receiver there is a common intermediate frequency amplifier (5) for the signals of all the reception processing channels (101, 102, 103, 104), to which intermediate frequency amplifier are applied in succession the signals of the parallel reception processing channels (e.g. 101) that are supplied via an intermediate frequency multiplexer (4), and in that connected downstream of the intermediate frequency amplifier (5) there is a demultiplexer (6), which on the output side distributes the serially amplified signals for further processing to the parallel reception processing channels (101', 102', 103', 104').

3. Radar system according to claim 1 or 2, characterised in that the intermediate frequency amplifier (5) has a final control element which is used for the amplitude regulation and, as a function of the dynamic level of the received echo signals (E_{P}, E_{T}) which is established in a downstream signal processor (9), controls the attenuation factor of the intermediate frequency amplifier by keyed regulation (5) in such a way that both echo signals (E_{P}, E_{T}) have a matching signal level.

4. Radar system according to one of the claims 1 or 2, characterised in that provided for the dynamic balancing between the passive echo signals (E_{P}) and the transponder echo signals (E_{T}) in the mixer and pre-amplifier device (3), for each reception processing channel (e.g. 101) there are two switchable parallel signal paths of varying attenuation or amplification, and in that the change-over occurs via a central control device (10) in such a way that the transponder echo signal (E_{T}) is supplied to a controlled attenuator (25) and the passive object signal (E_{P}) is supplied to a pre-amplifier (27).

5. Transponder for the reception of coded radar transmission pulses which are produced by a radar system according to one of the claims 1 to 4, as well as for the emission of transponder echo signals (E_{T}), having a decoder (34), which is connected on the input side to a series circuit arrangement consisting of antenna (30), limiter (31), circulator (32) and microwave network (33), and is provided for the evaluation of the received radar transmission pulses, characterised in that in the decoder (34) it is possible to derive from the radar transmission pulses a trigger signal for a signal generator (37) as well as control signals for a second flying object, which can be controlled in terms of the relative spatial location of a first movable object, in that a delay device (35), which can be enabled via the decoder (34), is provided for the trigger signal and permits a delayed signal release in the signal generator (37), in that the signal generator (37) is connected to the circulator (32) via a frequency converter (38) connected to an oscillator (40), and via a downstream power amplifier (39), and in that if an appropriate command is established from the control data, the transponder is able to emit transponder echo signals (E_{T}) with an additional delay determined by the delay device (35) which can be enabled.

6. Transponder according to claim 5, characterised in that the pulse repetition frequency of the transponder echo signals (E_{T}) is synchronous with and identical to the pulse repetition frequency of the transmitter.

7. Transponder according to one of the claims 5 and 6, characterised in that the change-over from undelayed to delayed signal release in the signal generator (37) occurs before there is a fall below the system distance resolution between the first and second objects which are to be measured, and in that the delay time of the transponder echo signals (E_{T}) emitted in a delayed manner is then in the order of magnitude of a few »s.

8. Transponder according to one of the claims 5 to 7, characterised in that the transponder oscillator (40) is designed for several transmission frequencies, the adjustment of which occurs via the decoder (34) as a function of the received, coded transmission pulses.

9. Transponder according to one of the claims 5 to 8, characterised in that the transponder is formed in such a way that the transponder echo signals (E_{T}) which are sent back correspond, in terms of their coding and band width, to the transmission pulses originally produced in the transmitter of the radar system, which are phase-coded, but not provided with the control code.

## Revendications

1. Système radar pour la mesure séquentielle de la position spatiale d'au moins un premier objet mobile et d'un second objet volant, dont le système radar peut commander la position par rapport au premier objet, et comportant un émetteur et un récepteur, et dans lequel l'émetteur envoie des données de commande, au moyen d'un code de commande qui est appliqué à une impulsion d'émission à phase codée, au second objet, qui renvoie, par l'intermédiaire d'un transpondeur, des signaux d'écho (E_{T}), qui correspondent, pour ce qui concerne leur codage et leur largeur de bande, aux impulsions d'émission produites initialement dans l'émetteur, au récepteur, qui possède, côté entrée, un réseau à micro-ondes (2), qui est relié, par l'intermédiaire de plusieurs, de préférence quatre, canaux parallèles de traitement de réception (101,102,103,104), à un dispositif formant mélangeur et préamplificateur (3), les mêmes canaux de réception (par exemple 101, 101') étant prévus dans le récepteur aussi bien pour les signaux d'échos passifs (E_{P}) que pour les signaux d'échos (E_{T}) du transpondeur, caractérisé par le fait qu'aux données de commande peuvent être ajoutées des informations pour la commande du second objet en élévation et en azimut ainsi qu'une instruction qui provoque un retard supplémentaire lors de la délivrance des signaux d'échos (E_{T}) du transpondeur, dans le cas où l'intervalle de temps entre l'apparition des signaux d'échos (E_{P} et E_{T}) délivrés par le second objet et par les autres objets, tombe au-dessous d'une valeur minimale fixée.

2. Système radar suivant la revendication 1, caractérisé par le fait que dans la voie de réception du récepteur est prévu un amplificateur de fréquence intermédiaire (5), qui est commun pour les signaux de tous les canaux de traitement de réception (101, 102, 103, 104) et qui est chargé successivement par les signaux qui sont envoyés, au moyen d'un multiplexeur de fréquence intermédiaire (4), aux canaux parallèles de traitement de réception (par exemple 101), et qu'en aval de l'amplificateur de fréquence intermédiaire (5) est branché un démultiplexeur (6), qui, côté sortie, sépare les signaux amplifiés de façon sérielle, pour leur traitement ultérieur dans les canaux parallèles de traitement de réception (101',102',103',104').

3. Système radar suivant la revendication 1 ou 2, caractérisé par le fait que l'amplificateur de fréquence intermédiaire (5) possède un circuit de réglage qui est utilisé pour la régulation d'amplitude et qui, en fonction du niveau de dynamique, déterminé dans un processeur de signaux (9) branché en aval, des signaux d'échos reçus (E_{P}, E_{T}), commande le facteur d'amortissement de l'amplificateur de fréquence intermédiaire au moyen d'une régulation commandée (5), de telle sorte que les deux signaux d'échos (E_{P}, E_{T}) possèdent un niveau égal.

4. Système radar suivant l'une des revendications 1 ou 2, caractérisé par le fait que pour la compensation de la dynamique entre les signaux d'échos passifs (E_{P}) et les signaux d'échos (E_{T}) du transpondeur, dans le dispositif formant mélangeur et préamplificateur (3), pour chaque canal de traitement de réception (par exemple 101), sont prévues deux voies parallèles et commutables de transmission de signaux présentant un affaiblissement différent ou une amplification différente, et que la commutation est exécutée par l'intermédiaire d'un dispositif central de commande (10) de telle sorte que le signal d'écho (E_{T}) du transpondeur est envoyé à un affaiblisseur commandé (25) et que le signal d'objet passif (E_{P}) est envoyé à un préamplificateur (27).

5. Transpondeur pour la réception d'impulsions d'émission radar codées, qui sont produites par un système radar suivant l'une des revendications 1-4, ainsi que pour la délivrance de signaux d'échos (E_{T}) du transpondeur, comportant un décodeur (34), qui est relié côté entrée à un circuit série constitué par une antenne (30), un limiteur (31), un circulateur (32) et un réseau à micro-ondes (33) et qui est prévu pour l'évaluation des impulsions d'émission radar reçues, caractérisé par le fait que dans le décodeur (34) peuvent être dérivés des impulsions d'émission radar un signal de déclenchement pour un générateur de signaux (37) ainsi que des signaux de commande pour un second objet volant, dont la position spatiale par rapport à un premier objet mobile peut être commandé, qu'il est prévu un dispositif de retardement (36), pouvant être branché en supplément au moyen du décodeur (34), pour le signal de déclenchement, dispositif de retardement qui permet un déclenchement retardé du signal dans le générateur de signaux (37), que le générateur de signaux (37) est raccordé au circulateur (32) par l'intermédiaire d'un convertisseur de fréquence (38), relié à un oscillateur (40) et un amplificateur de puissance (32) branché en aval, et que le transpondeur est à même de délivrer des signaux d'échos (E_{T}) avec un retard supplémentaire déterminé par le dispositif de retardement (35) branché en supplément, dans le cas où une instruction correspondante est déterminée à partir des données de commande.

6. Transpondeur suivant la revendication 5, caractérisé par le fait que la fréquence de répétition des impulsions des signaux d'échos (E_{T}) du transpondeur est synchrone et identique à la fréquence de répétition des impulsions de l'émetteur.

7. Transpondeur suivant l'une des revendications 5 et 6, caractérisé par le fait que la commutation du déclenchement non retardé du signal au déclenchement retardé du signal dans le générateur de signaux (37) s'effectue avant le dépassement, par valeurs inférieures, de la résolution de distance du système entre les premier et second objets à mesurer, et que le retard des signaux d'échos (E_{T}) du transpondeur, délivrés d'une manière retardée, est de l'ordre de quelques »s.

8. Transpondeur suivant l'une des revendications 5 à 7, caractérisé par le fait que l'oscillateur (40) du transpondeur est conçu pour plusieurs fréquences d'émission, dont le réglage s'effectue au moyen du décodeur (34) en fonction d'impulsions d'émission reçues et codées.

9. Transpondeur suivant l'une des revendications 5 à 8, caractérisé par le fait que le transpondeur est agencé de telle sorte que les signaux d'échos (E_{T}) du transpondeur, qui sont envoyés, correspondent, du point de vue de leur codage et de leur largeur de bande, aux impulsions d'émission à phase codée, qui sont produites initialement dans l'émetteur du système radar, mais ne sont pas pourvues du code de commande.
